# EUROPÄISCHE PATENTSCHRIFT

(11) **EP 4 177 081 B1**
(45) Veröffentlichungstag und Bekanntmachung des Hinweises auf die Patenterteilung: **10.07.2024**
(21) Anmeldenummer: 22193905.1
(22) Anmeldetag: 05.09.2022
(51) Int. Cl.: B60C 11/13, B60C 11/03

(54) **FAHRZEUGLUFTREIFEN**
PNEUMATIC TYRE FOR VEHICLES
BANDAGE PNEUMATIQUE POUR VÉHICULE

(30) Priorität: 05.11.2021 DE 102021212465
(43) Veröffentlichungstag der Anmeldung: 10.05.2023
(73) Patentinhaber: Continental Reifen Deutschland GmbH, 30175 Hannover (DE)
(72) Erfinder: Özüduru, Ahmet, 30165 Hannover (DE); Woidtke, Oliver, 30165 Hannover (DE); Ecke, Stefan, 30165 Hannover (DE)
(74) Vertreter: Continental Corporation

(56) Entgegenhaltungen:
- EP-A1- 2 311 656
- EP-B1- 2 748 018
- DE-A1- 102018 119 898
- JP-A- 2013 216 118
- US-A1- 2018 312 009
- US-A1- 2020 189 323
- US-A1- 2020 361 244

## Beschreibung

Die Erfindung betrifft einen Fahrzeugluftreifen mit einem Laufstreifen mit zumindest einer an zumindest einer Seite von einer Umfangsrille begrenzten Profilrippe, welche mit in die Umfangsrille einmündenden, zur axialen Richtung unter Winkel von 0° bis 55° verlaufenden Querrillen mit jeweils einer an der Laufstreifenperipherie ermittelten Breite von 2,75 mm bis 12,00 mm und einer maximalen Tiefe von 70% bis 100% der Profiltiefe versehen ist, wobei die Querrillen die Profilrippe in blockartige Profilelemente mit Kantenbereichen an den Querrillen gliedern, wobei an zumindest jeweils einem Kantenbereich eine in Draufsicht langgestreckte, nutförmige Ausnehmung mit einer an der Laufstreifenperipherie liegenden radial äußeren Begrenzungskante und einer an der Querrille liegenden radial inneren Begrenzungskante ausgebildet ist, wobei sich die Breite der Querrille auf eine in die Laufstreifenperipherie projizierte Bezugskante bezieht, welche sich durch in radialer Richtung erfolgte Projektion der radial inneren Begrenzungskante der Ausnehmung ergibt.

Ein derartiger Fahrzeugluftreifen ist beispielsweise aus der JP 2013 216 118 A bekannt. Der Fahrzeugluftreifen weist einen Laufstreifen mit Profilrippen auf, welche durch in axialer Richtung verlaufende Querrillen mit einer Breite von beispielsweise 9,0 mm und einer maximalen Tiefe von beispielsweise zirka 85% der Profiltiefe in blockartige Profilelemente gegliedert sind. An je einem Kantenbereich jeder Querrille ist eine nutförmige, treppenartige Ausnehmung ausgebildet, welche für die Schneeperformance günstig sein soll.

Aus der EP 2 748 018 B1 ist ein Reifen mit einen Laufstreifen mit einer bestimmten Einschnittdichte und einer bestimmten Anzahl an Querrillen bekannt, wodurch gute Traktionseigenschaften auf trockener und auf schneebedeckter Fahrbahn erzielt werden sollen. Bei einem Ausführungsbeispiel weist der Laufstreifen eine beidseitig von Umfangsrillen begrenzte Profilrippe mit in die Umfangsrillen einmündenden Querrillen auf. Die Querrillen weisen eine Breite von 2,0 mm bis 4,0 mm auf und sind an ihrer einen Rillenflanke mit einer zur Laufstreifenperipherie verlaufenden Fase versehen, welche eine langgestreckte Ausnehmung an der Querrille begrenzt. Die Fase ist für die Bremseigenschaften auf trockener Fahrbahn und die Traktionseigenschaften auf Schnee von Vorteil. Der erste Effekt der Fase ist dadurch begründet, dass sich beim Bremsen die Rillenkanten nicht mehr "Einrollen". Der zweite Effekt wird vor allem deshalb erreicht, weil die Fasen die Größe der Rippenaußenfläche etwas verringern, sodass zwischen dieser und dem Untergrund ein größerer Druck wirkt und derart ein Eindringen der jeweiligen Kanten in den Schnee begünstigt wird.

Es ist ferner bekannt, dass sich beim Fahren auf Schnee in den Querrillen des Laufstreifens Schnee ansammelt und verdichtet. Über den Effekt der Schnee-Schnee-Reibung können in der Folge Vorteile im Hinblick auf die Schneeperformance erzielt werden. Dieser Effekt tritt jedoch erst bei ausreichend hoher Schneelage auf, da andernfalls keine ausreichende Verdichtung des Schnees in der Querrille möglich ist.

Der Erfindung liegt daher die Aufgabe zugrunde, bei einem Fahrzeugluftreifen der eingangs genannten Art die Schneeperformance bei geringer Schneelage zu verbessern.

Gelöst wird die gestellte Aufgabe erfindungsgemäß dadurch,
dass in der Ausnehmung eine an die Querrille angrenzende, über die Länge der Ausnehmung verlaufende und die radial innere Begrenzungskante aufweisende Erhebung ausgebildet ist, wobei die Ausnehmung an der der Querrille abgewandten Seite der Erhebung mit einer die Erhebung entlangverlaufenden Einbuchtung versehen ist, welche durch einen im Querschnitt bogenförmig sowie durch die tiefste Stelle der Ausnehmung verlaufenden Boden begrenzt ist, an welchen eine von der radial äußeren Begrenzungskante ausgehende, zumindest abschnittsweise bogenförmig verlaufende Seitenfläche der Ausnehmung stetig anschließt.

Gemäß der Erfindung ist in einer nutförmigen Ausnehmung eine Kombination aus einer Erhebung und einer Einbuchtung ausgebildet. Durch die bogenförmig verlaufende Seitenfläche der Ausnehmung und den bogenförmig verlaufenden Boden der Einbuchtung werden die Ansammlung und nachfolgende Verdichtung von Schnee zunächst in der Einbuchtung und anschließend in der gesamten nutförmigen Ausnehmung begünstigt, wobei dafür bereits geringe Schneemengen ausreichen. Die zumindest abschnittsweise bogenförmig verlaufende Seitenfläche begünstigt dabei vor allem den Schneetransport in Richtung Einbuchtung. Über den Effekt der Schnee-Schnee-Reibung wird bei mit Schnee gefüllter Ausnehmung die Schneeperformance bei geringer Schneelage deutlich verbessert.

Gemäß einer bevorzugten Ausführung weist die Ausnehmung an ihrer tiefsten Stelle in radialer Richtung eine maximale Tiefe von 15% bis 30%, insbesondere von zumindest 20%, der Profiltiefe auf. Eine solche Ausnehmung füllt sich bei geringer Schneelage besonders zügig mit Schnee, wobei der für die Schneeperformance vorteilhafte Effekt über einen gewissen Laufstreifenabrieb erhalten bleibt.

Gemäß einer weiteren bevorzugten Ausführung weist die Ausnehmung, im Querschnitt betrachtet, zwischen der radial äußeren Begrenzungskante und der projizierten Bezugskante eine Breite von 1,0 mm bis 1,8 mm, insbesondere von 1,2 mm bis 1,6 mm, auf. Diese Maßnahme trägt dazu bei, dass sich die Ausnehmung bei geringer Schneelage besonders zügig mit Schnee füllt, wobei sich in der Ausnehmung ein für die Schneeperformance vorteilhaft breiter, komprimierter "Schneebalken" bildet.

Eine weitere bevorzugte Ausführung ist dadurch gekennzeichnet, dass die Ausnehmung eine auf ihre radial äußere Begrenzungskante bezogene, in die axiale Richtung projizierte Länge von 25% bis 100%, insbesondere von zumindest 50%, bevorzugt von zumindest 70%, der an der Laufstreifenperipherie in axialer Richtung ermittelten maximalen Breite der Profilrippe aufweist, wobei die maximale Breite bei schulterseitigen Profilrippen innerhalb der Bodenaufstandsfläche ermittelt ist. Da die Ausnehmung, wie bereits erwähnt, an einem an einer Querrille liegenden Kantenbereich eines Profilelementes ausgebildet ist, ist die Länge der Ausnehmung entsprechend auf die Länge der Querrille abgestimmt, reicht also nicht über diese hinaus. In Ausnehmungen der angegebenen Länge bildet sich beim Fahren auf Schnee ein für die Schneeperformance vorteilhaft langer, komprimierter "Schneebalken".

Weitere bevorzugte Ausführungen betreffen den Boden der Einbuchtung.

Bei einer diesbezüglich bevorzugten ersten Ausführung verläuft der Boden der Einbuchtung, im Querschnitt betrachtet, entlang eines Kreisbogens mit einem Radius von 0,1 mm bis 0,5 mm, insbesondere von 0,2 mm bis 0,4 mm. Dies ist für die Verdichtung von Schnee im Bereich der Einbuchtung vorteilhaft.

Bei einer diesbezüglich bevorzugten zweiten Ausführung, welche mit der ersten Ausführung kombinierbar ist, endet der Boden der Einbuchtung an einer an der Erhebung ausgebildeten scharfen Kante. Dies trägt zu einem guten Halt von Schnee in der Einbuchtung bei.

Bei einer vorteilhaften Weiterbildung der zweiten Ausführung weist die Einbuchtung eine ausgehend von der scharfen Kante parallel zur Laufstreifenperipherie gemessene, konstante Breite von 35% bis 45% der Breite der Ausnehmung auf. In einer derart schmalen Ausnehmung verdichtet sich der Schnee besonders effektiv, sodass die Schneeperformance bei geringen Schneelagen weiter verbessert ist.

Gemäß einer weiteren vorteilhaften Weiterbildung der zweiten Ausführung weist die Einbuchtung in radialer Richtung eine gegenüber dem Niveau der scharfen Kante in radialer Richtung ermittelte maximale Tiefe von 0,10 mm bis 0,30 mm, insbesondere von 0,15 mm bis 0,25 mm, auf. In einer derart seichten Ausnehmung verdichtet sich Schnee ebenfalls effektiv, sodass die Schneeperformance bei geringen Schneelagen ebenfalls weiter verbessert ist.

Eine weitere bevorzugte Ausführung ist dadurch gekennzeichnet, dass die Erhebung eine gegenüber der tiefsten Stelle der Einbuchtung in radialer Richtung ermittelte maximale Höhe von 0,10 mm bis 0,30 mm, insbesondere von 0,15 mm bis 0,25 mm, aufweist.

Gemäß einer weiteren bevorzugten Ausführung weist die Erhebung eine parallel zur Laufstreifenperipherie verlaufende Deckfläche auf.

Bei einer vorteilhaften Weiterbildung der zuletzt genannten bevorzugten Ausführung weist die Erhebung eine auf die bereits erwähnte Breite der Ausnehmung abgestimmte Breite auf, wobei diese Weiterbildung dadurch gekennzeichnet ist, dass die Erhebung, im Querschnitt betrachtet, eine an der Deckfläche ermittelte Breite von 20% bis 30% der Breite der Ausnehmung aufweist. Dies sorgt insbesondere für eine gute Stabilität der Erhebung, was für die Schneeverdichtung in der angrenzenden Einbuchtung und der die Einbuchtung umfassenden Ausnehmung günstig ist.

Einer weitere bevorzugte Ausführung ist dadurch gekennzeichnet, dass sich die Seitenfläche der Ausnehmung aus einem radial äußeren Flächenabschnitt und einem radial inneren Flächenabschnitt zusammensetzt, wobei der radial äußere Flächenabschnitt gerade sowie zur radialen Richtung unter einem Winkel von 0° bis 3°, insbesondere von höchstens 2°, verläuft und in radialer Richtung bis in eine Tiefe von 0,30 mm bis 0,70 mm, insbesondere 0,40 mm bis 0,60 mm, reicht, wobei der radial innere Flächenabschnitt stetig an den radial äußeren Flächenabschnitt anschließt und bogenförmig sowie zumindest über den Großteil seiner Erstreckung entlang eines Kreisbogens mit einem Radius r₁ von 1,3 mm bis 1,7 mm verläuft. Der radial innere Flächenabschnitt begünstigt die Ansammlung und nachfolgende Verdichtung von Schnee zunächst in der Einbuchtung und anschließend in der gesamten nutförmigen Ausnehmung. Durch den "steilen" radial äußeren Flächenabschnitt ist eine für den Schneegriff scharfe Griffkante bei neuem und wenig abgefahrenem Reifen an der Laufstreifenperipherie zur Verfügung gestellt.

Gemäß einer weiteren bevorzugten Ausführung ist an den Querrillen jeweils ausschließlich an einem Kantenbereich eine Ausnehmung ausgebildet und der andere Kantenbereich ist von einer Blockkante gebildet.

Eine weitere bevorzugte Ausführung ist dadurch gekennzeichnet, dass der Laufstreifen laufrichtungsgebunden ausgeführt ist, sodass von den Kantenbereichen der blockartigen Profilelemente der eine ein beim Abrollen des Reifens bei Vorwärtsfahrt zuerst in den Untergrund eintretender, einlaufender Kantenbereich und der andere ein auslaufender Kantenbereich ist, wobei die Ausnehmungen zumindest, insbesondere ausschließlich, an den auslaufenden Kantenbereichen ausgebildet sind. Der auslaufende Kantenbereich wird vor allem beim Bremsen stark beansprucht. Da sich die Ausnehmung am auslaufenden Kantenbereich befindet, wird ein "Einrollen" dieses Kantenbereiches beim Bremsen vermieden bzw. weitgehend vermeiden. Andernfalls wäre es in diese Hinsicht günstig, an dieser Kante eine Fase (Schrägfläche) auszubilden. Die Funktion der Fase wird somit von der Ausnehmung übernommen, sodass die Nettokontaktfläche des Reifens nicht durch zusätzlich Fasen reduziert ist.

Weitere Merkmale, Vorteile und Einzelheiten der Erfindung werden nun anhand der Zeichnung, die schematisch ein Ausführungsbeispiel der Erfindung zeigt, näher beschrieben. Dabei zeigen
Fig. 1 eine vereinfachte Draufsicht auf einen in die Ebene abgewickelten Umfangsabschnitt eines Laufstreifens eines Fahrzeugluftreifens mit einer Ausführungsvariante der Erfindung,
Fig. 2 eine vergrößerte Draufsicht auf das Detail Z₂ der Fig. 1,
Fig. 3 einen Schnitt entlang der Linie III-III der Fig. 2,
Fig. 4 einen Schnitt entlang der Linie IV-IV der Fig. 2 und
Fig. 5 eine weiter vergrößerte Ansicht des Details Z₅ der Fig. 4.

Gemäß der Erfindung ausgeführte Fahrzeugluftreifen sind Reifen für Kraftfahrzeuge, insbesondere für mehrspurige Kraftfahrzeuge, sowie vorzugsweise Reifen in Radialbauart für Personenkraftwagen, Vans oder Light-Trucks (Kleintransporter mit zGM ≤ 3,5 t, Leichte LKWs mit zGM ≤ 7,5 t), wobei die Fahrzeugluftreifen zum Fahren unter winterlichen Fahrbedingungen besonders gut geeignet sind.

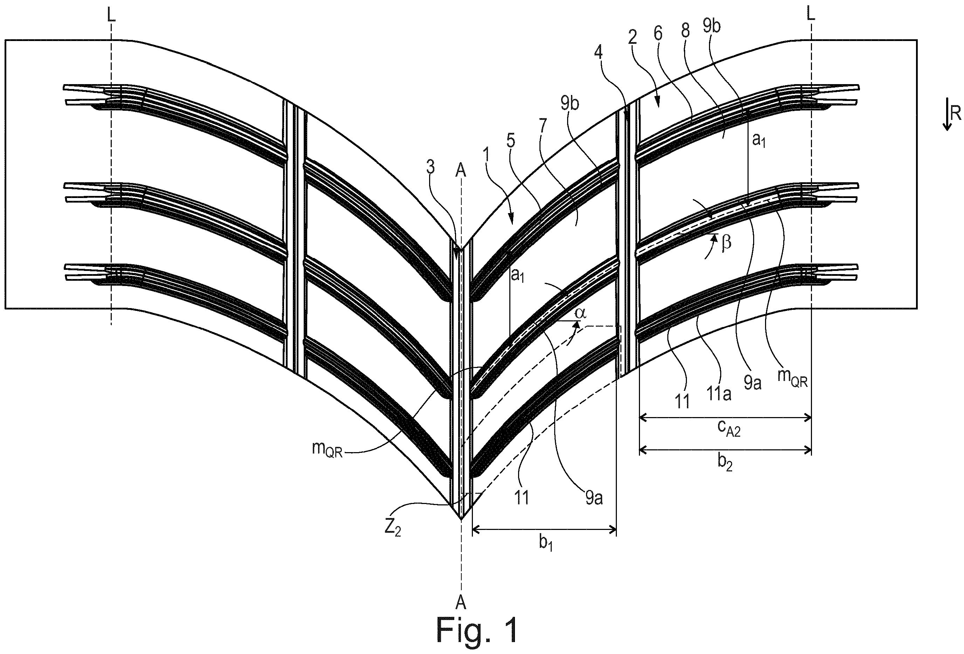

Fig. 1 zeigt eine Draufsicht auf einen Umfangsabschnitt eines Laufstreifens eines Fahrzeugluftreifens. Der Laufstreifen weist beim gezeigten Ausführungsbeispiel eine laufrichtungsgebunden ausgeführte Profilierung auf, wobei der Fahrzeugluftreifen derart auf einer Achse eines Fahrzeuges zu montieren ist, dass er die durch den Pfeil R symbolisierte Abrollrichtung bei Vorwärtsfahrt aufweist. Die Reifenäquatorialebene ist durch eine Linie A-A und die seitlichen Ränder des bodenberührenden Teiles des Laufstreifens (entspricht dem statisch ermittelten Footprint gemäß E.T.R.T.O.-Standards: Last bei 70 % der maximalen Tragfähigkeit bei einem Innendruck von 85 % nach E.T.R.T.O.-Norm) sind durch Linien L angedeutet.

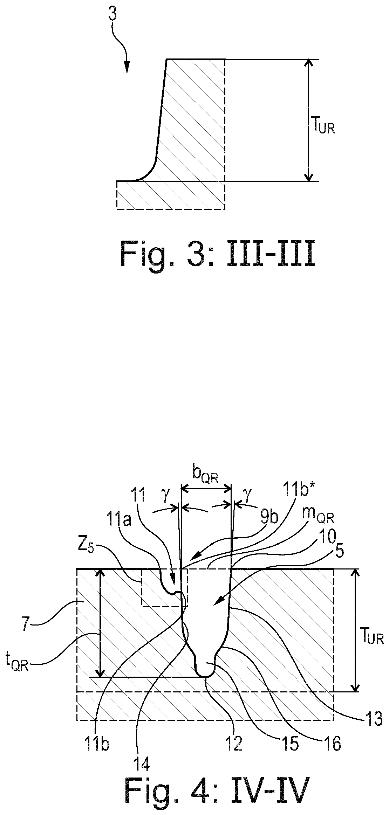

Der Laufstreifen ist bezüglich der Reifenäquatorialebene (Linie A-A) symmetrisch ausgeführt und weist in jeder Laufstreifenhälfte eine mittlere Profilrippe 1 und eine schulterseitige Profilrippe 2 auf. Die mittleren Profilrippen 1 sind voneinander durch eine beim Ausführungsbeispiel in Draufsicht gerade verlaufende zentrale Umfangsrille 3 sowie zur jeweils benachbarten schulterseitigen Profilrippe 2 durch eine beim Ausführungsbeispiel in Draufsicht gerade verlaufende schulterseitige Umfangsrille 4 getrennt. Die Umfangsrillen 3, 4 sind auf die jeweils vorgesehenen Profiltiefe T_{UR} (Fig. 3, gezeigt für die zentrale Umfangsrille 3) ausgeführt, welche für den bevorzugten Reifentyp üblicherweise 6,5 mm bis 13,0 mm beträgt. Sind die Umfangsrillen 3, 4 verschieden tief ausgeführt, wird unter der Profiltiefe T_{UR} die Tiefe der tiefsten Umfangsrille 3, 4 verstanden.

Die mittleren Profilrippen 1 sind jeweils mit einer Vielzahl von in Draufsicht parallel zueinander verlaufenden, mittleren Querrillen 5 versehen, welche die jeweilige Profilrippe 1 durchqueren und in mittlere Profilblöcke 7 gliedern. Die schulterseitigen Profilrippen 2 sind jeweils mit einer Vielzahl von in Draufsicht parallel zueinander verlaufenden, schulterseitigen Querrillen 6 versehen, welche in die jeweilige schulterseitige Umfangsrille 4 einmünden und schulterseitige Profilblöcke 8 voneinander trennen. Die Profilrippen 1, 2 weisen jeweils eine an der Laufstreifenperipherie in axialer Richtung ermittelte maximale Breite b₁ (Profilrippe 1), b₂ (Profilrippe 2) auf, wobei die maximale Breite b₂ innerhalb der Bodenaufstandsfläche, also bis zum jeweiligen seitlichen Rand der Bodenaufstandsfläche (Linie L), ermittelt ist. Bei in Draufsicht nicht gerade verlaufenden Umfangsrillen 3, 4, welche den Profilrippen 1, 2 eine über ihre Umfangserstreckung variierende Breite verleihen, ist die maximale Breite b₁, b₂ an einer breitesten Stellen der Profilrippe 1, 2 ermittelt. Beispielsweise können die oder einzelne der Umfangsrillen 3, 4 in Draufsicht wellen- oder zickzack-förmig verlaufen.

Jeder Profilblock 7, 8 weist - an der Laufstreifenperipherie - einen an der einen angrenzenden Querrille 5 (Profilblock 7), 6 (Profilblock 8) ausgebildeten, einlaufenden Kantenbereich 9a und eine an der anderen angrenzenden Querrille 5 (Profilblock 7), 6 (Profilblock 8) ausgebildeten, auslaufenden Kantenbereich 9b auf, wobei beim Abrollen des Reifens bei Vorwärtsfahrt (Pfeil R) der einlaufende Kantenbereich 9a vor dem auslaufenden Kantenbereich 9b in den Untergrund eintritt.

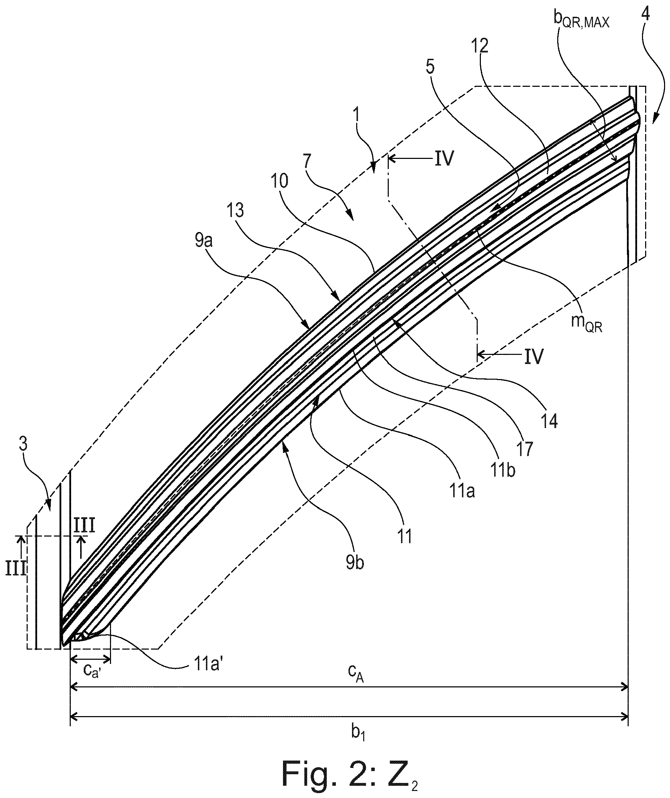

Der einlaufende Kantenbereich 9a ist von einer einzigen, an der Laufstreifenperipherie verlaufenden Blockkante 10 gebildet (Fig. 2: gezeigt für mittlere Profilblöcke 7). Am auslaufenden Kantenbereich 9b befindet sich eine in Draufsicht langgestreckte, oberflächliche, nutähnliche Ausnehmung 11 (siehe insbesondere Fig. 2: gezeigt für einen mittleren Profilblock 7), welche - wie Fig. 2 iVm mit Fig. 4 für einen mittleren Profilblock 7 zeigt - eine an der Laufstreifenperipherie liegende, radial äußere Begrenzungskante 11a und eine an der Querrille 5, 6 (Fig. 2 und 4: gezeigt für Querrille 5) liegende, radial innere Begrenzungskante 11b aufweist. Auf die weitere Ausgestaltung der nutähnlichen Ausnehmung 11 wird später noch genauer eingegangen.

Wie Fig. 1 ferner zeigt, erstrecken sich die Querrillen 5, 6 V-förmig über die Laufstreifenbreite, wobei die mittleren Querrillen 5 in die zentrale Umfangsrille 3 sowie die jeweilige schulterseitige Umfangsrille 4 einmünden und die schulterseitigen Querrillen 6 in die entsprechende schulterseitige Umfangsrille 4 einmünden, im Wesentlichen in Fortsetzung zu den mittleren Querrillen 5 verlaufen und außerhalb der Bodenaufstandsfläche auslaufen. Die Querrillen 5, 6 weisen jeweils eine in Draufsicht dem Rillenverlauf folgende Rillenmittlinie m_{QR} auf, welche mittig zwischen der an der jeweiligen Querrille 5, 6 befindlichen Blockkante 10 und einer nicht gegenständlichen, projizierten Bezugskante 11b* (Fig. 4) ermittelt ist. In Fig. 1 ist im Bereich von je einer Querrille 5, 6 eine Rillenmittellinie m_{QR} eingezeichnet, wobei diese Querrillen 5, 6 aus Übersichtsgründen vereinfacht dargestellt sind. Die Bezugskante 11b* (Fig. 4) ergibt sich durch Projektion der radial inneren Begrenzungskante 11b der an der jeweiligen Querrille 5, 6 befindlichen Ausnehmung 11 in die Laufstreifenperipherie, wobei die Projektion in radialer Richtung erfolgt (Fig. 4, vergl. in Fig. 4 angedeutete Lage der Rillenmittlinie m_{QR}). Die Querrillen 5, 6 verlaufen, in Draufsicht betrachtet und jeweils bezogen auf ihre Rillenmittellinie m_{QR}, bogenförmig sowie zur axialen Richtung unter einem Winkel α (Querrillen 5) von 30° bis 55°, insbesondere von zumindest 35°, bzw. einem Winkel β (Querrillen 6) von 5° bis 20°. Die Winkel α und β sind jeweils bezüglich einer lokal an die gebogen verlaufende Rillenmittellinie m_{QR} angelegten Tangente ermittelt. Innerhalb einer Profilrippe 1, 2 aufeinanderfolgende Querrillen 5, 6 weisen auf die Rillenmittellinien m_{QR} bezogene, kleinstmögliche in Umfangsrichtung ermittelte gegenseitige Abstände a₁ von vorzugsweise 20,0 mm bis 35,0 mm auf.

Die weitere Ausgestaltung der mittleren Querrillen 5 und der nutähnlichen Ausnehmungen 11 wird nachfolgend anhand einer einzelnen mittleren Querrille 5 und der an diese angrenzenden, nutähnlichen Ausnehmung 11 erläutert. Im Anschluss wird kurz auf die Ausgestaltung der schulterseitigen Querrillen 6 und den an diesen ausgebildeten Ausnehmungen 11 eingegangen.

Wie Fig. 2 in Kombination mit Fig. 4 zeigt, weist die Querrille 5 eine in Draufsicht senkrecht zur Rillenmittlinie m_{QR} (Fig. 2) am Niveau der Laufstreifenperipherie ermittelte Breite b_{QR} (Fig. 4) von 2,75 mm bis 12,00 mm, insbesondere von 4,00 mm bis 7,00 mm, auf, wobei sich die Breite b_{QR} auf die erwähnte Bezugskante 11b* (Fig. 4) bezieht und daher zwischen der Bezugskante 11b* und der Blockkante 10 ermittelt ist. Der Ausdruck "senkrecht zur Rillenmittellinie m_{QR}" bezieht sich auf eine lokal an die bogenförmig verlaufende Rillenmittelinie m_{QR} angelegte Tangente. Gemäß Fig. 2 nimmt die Breite b_{QR} (Fig. 4) beim gezeigten Ausführungsbeispiel in Richtung zur Laufstreifenaußenseite kontinuierlich um insbesondere bis zu 2,5 mm zu, sodass die Querrille 5 an ihrem laufstreifenaußenseitigen Ende eine maximale Breite b_{QR, MAX} aufweist. Alternativ ist die Breite b_{QR} konstant ausgeführt. Ferner weist die Querrille 5 in radialer Richtung eine maximale Tiefe t_{QR} (Tiefe an der tiefsten Stelle, Fig. 4) von 70% bis 100% der Profiltiefe T_{UR} (Fig. 3, Fig. 4) auf, wobei die maximale Tiefe t_{QR} insbesondere höchstens der um 1,00 mm verringerten Profiltiefe T_{UR} beträgt.

Gemäß Fig. 2 und Fig. 4 ist die Querrille 5 durch einen Rillengrund 12, eine Rillenflanke 13, welche von der den einlaufenden Kantenbereich 9a (Fig. 2) bildenden Blockkante 10 ausgeht, und eine Rillenflanke 14, welche zu der zum auslaufenden Kantenbereich 9b gehörenden, radial inneren Begrenzungskante 11b der Ausnehmung 11 verläuft, begrenzt. Gemäß Fig. 4 verlaufen die Rillenflanken 13, 14, im in Draufsicht senkrecht zur Rillenmittellinie m_{QR} ausgerichteten Querschnitt betrachtet (vergl. Lage der Schnittlinie IV-IV in Fig. 2), zur radialen Richtung jeweils unter einem Winkel γ von 0° bis 9°, wobei der Winkel γ der Rillenflanke 14 vorzugsweise höchstens 4° beträgt. Der Rillengrund 12 begrenzt eine schmäler als die sonstige Querrille 5 ausgeführte Rillengrundrille 15 und ist, im erwähnten Querschnitt betrachtet, U-förmig ausgeführt. Zwischen jeder Rillenflanke 13, 14 und dem Rillengrund 12 verläuft eine Übergangsflanke 16, welche im erwähnten Querschnitt betrachtet, eine schräge oder gerundet zum Rillengrund 12 abfallende Fläche ist.

Gemäß Fig. 2 erstreckt sich die Ausnehmung 11 beim gezeigten Ausführungsbeispiel über die gesamte Querrille 5, sodass auch die radial äußere Begrenzungskante 11a und die radial innere Begrenzungskante 11b über die gesamte Querrille 5 verlaufen und die Ausnehmung 11 eine auf ihre radial äußere Begrenzungskante 11a bezogene, in die axiale Richtung projizierte Länge c_{A} von 100% der maximalen Breite b₁ der Profilrippe 1 aufweist. Die radial äußere Begrenzungskante 11a verläuft - mit Ausnahme von einem beim Ausführungsbeispiel vorgesehenen, zur zentralen Umfangsrille 3 verlaufenden Kantenendabschnitt 11a' - in Draufsicht durchgehend gebogen (bogenförmig). Der Kantenendabschnitt 11a' verläuft in Draufsicht ebenfalls durchgehend gebogen, ist jedoch zur sonstigen Begrenzungskante 11a entgegengesetzt gekrümmt und weist an der Laufstreifenperipherie eine in die axiale Richtung projizierte Länge cₐ' von bis zu 2,0 mm auf.

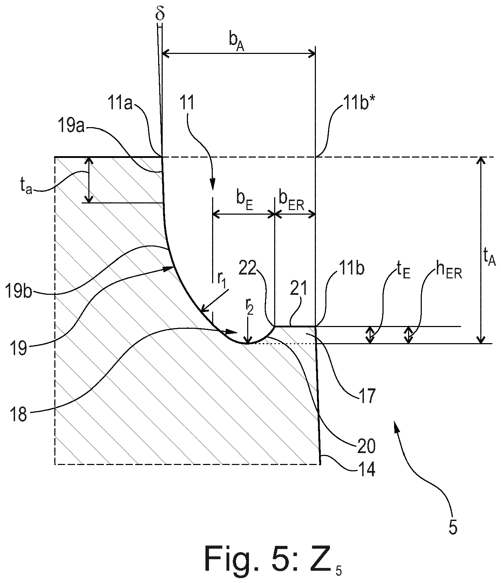

Wie Fig. 5 zeigt, ist in der Ausnehmung 11 angrenzend an die Querrille 5, eine über die gesamte Ausnehmung 11 verlaufende (vergl. Fig. 2), flache rippenförmige Erhebung 17, an welcher sich die bereits erwähnte, radial innere Begrenzungskante 11b befindet, ausgebildet. An der der Querrille 5 abgewandten Seite der Erhebung 17 grenzt eine die gesamte Erhebung 17 entlangverlaufende, zur Ausnehmung 11 gehörende, seichte Einbuchtung 18 an.

Die Einbuchtung 18 weist einen abschnittsweise an die Erhebung 17 angrenzenden Boden 20 auf. Die Erhebung 17 ist zur Einbuchtung 18 durch den entsprechenden Abschnitt des Bodens 20, in radialer Richtung durch eine parallel zur Laufstreifenperipherie verlaufende Deckfläche 21 und an der Querrille 5 durch einen radial äußeren Endabschnitt der Rillenflanke 14 begrenzt. Die Ausnehmung 11 weist eine von der radial äußeren Begrenzungskante 11a ausgehende, bis in den Bereich der Einbuchtung 18 reichende Seitenfläche 19 auf.

Die Ausnehmung 11 ist somit, im in Drauffischt senkrecht zur Rillenmittellinie m_{QR} verlaufenden Querschnitt betrachtet (vergl. Lage der Schnittlinie IV-IV in Fig. 2), durch die Seitenfläche 19, den Boden 20 der Einbuchtung 18 und die Deckfläche 21 der Erhebung 17 begrenzt. Die weitere Beschreibung der Seitenfläche 19, des Bodens 20 und der Deckfläche 21 bezieht sich jeweils auf den erwähnten Querschnitt.

Die Seitenfläche 19 verläuft halb U-förmig und setzt sich aus einem radial äußeren Flächenabschnitt 19a und einem radial inneren Flächenabschnitt 19b zusammen. Der radial äußere Flächenabschnitt 19a verläuft gerade sowie zur radialen Richtung unter einem Winkel δ von 0° bis 3°, insbesondere von höchstens 2°, und reicht in radialer Richtung bis in eine Tiefe tₐ von 0,30 mm bis 0,70 mm, insbesondere von 0,40 mm bis 0,60 mm. Der radial innere Flächenabschnitt 19b schließt in der Tiefe tₐ stetig ("knickfrei", "kantenfrei") an den radial äußeren Flächenabschnitt 19a an und verläuft bogenförmig sowie zumindest über den Großteil seiner Erstreckung entlang eines Radius r₁ von 1,3 mm bis 1,7 mm und endet am Boden 20 der Einbuchtung 18. Der Boden 20 schließt stetig an das radial innere Ende des radial inneren Flächenabschnittes 19b an, verläuft entlang eines Radius r₂ von 0,1 mm bis 0,5 mm, insbesondere von 0,2 mm bis 0,4 mm, schließt ferner an der Deckfläche 21 über eine scharfe Kante 22 an und durchläuft die in radialer Richtung tiefste Stelle der Ausnehmung 11.

Die Ausnehmung 11 weist in radialer Richtung eine maximale Tiefe t_{A} (Tiefe an der erwähnten tiefsten Stelle im Bereich des Bodens 20) von 15% bis 30%, insbesondere von zumindest 20%, der Profiltiefe T_{UR} (Fig. 4) auf. Ferner weist die Ausnehmung 11 eine zwischen der radial äußeren Begrenzungskante 11a und der bereits erwähnten Bezugskante 11b* an der Laufstreifenperipherie ermittelte Breite b_{A} von 1,0 mm bis 1,8 mm, insbesondere von 1,2 mm bis 1,6 mm, auf, wobei die Breite b_{A} vorzugsweise 20% bis 40%, insbesondere 25% bis 35%, besonders bevorzugt 27% bis 33%, der maximalen Breite b_{QR, MAX} (Fig. 2) der Querrille 5 beträgt.

Die Einbuchtung 18 weist in radialer Richtung eine gegenüber dem Niveau der scharfen Kante 22 in radialer Richtung ermittelte maximale Tiefe t_{E} (Tiefe an der erwähnten tiefsten Stelle im Bereich des Bodens 20) von 0,10 mm bis 0,30 mm, insbesondere von 0,15 mm bis 0,25 mm, sowie eine am Niveau der scharfen Kante 22 parallel zur Laufstreifenperipherie ermittelte konstante Breite b_{E} von 35% bis 45% der Breite b_{A} der Ausnehmung 11 auf.

Die Erhebung 17 weist eine gegenüber dem Niveau der maximalen Tiefe t_{E} der Einbuchtung 18 in radialer Richtung ermittelte maximale Höhe h_{ER} (Höhe an der höchsten Stelle) auf, deren Größe - entsprechend der parallel zur Laufstreifenperipherie verlaufenden Deckfläche 21 - mit der Größe der maximalen Tiefe t_{E} der Einbuchtung 18 übereinstimmt und daher 0,10 mm bis 0,30 mm, insbesondere von 0,15 mm bis 0,25 mm, beträgt. Ferner weist die Erhebung 17 eine an der Deckfläche 21 ermittelte Breite b_{ER} von 20% bis 30% der Breite b_{A} der Ausnehmung 11 auf.

Gemäß Fig. 1 verläuft die bereits erwähnte an je einer schulterseitigen Querrille 6 ausgebildete Ausnehmung 11 über die Bodenaufstandsfläche (Linie L) hinaus, weist innerhalb der Bodenaufstandsfläche eine auf die radial äußere Begrenzungskante 11a bezogene, in die axiale Richtung projizierte Länge c_{A2} von 100% der Breite b₂ der Profilrippe 2 auf. Ansonsten ist die in je einer schulterseitigen Querrille 6 ausgebildete Ausnehmung 11 übereinstimmend zu der an einer mittleren Querrille 5 ausgebildeten Ausnehmung 11 ausgeführt.

Die Erfindung ist auf das beschriebene Ausführungsbeispiel nicht beschränkt.

Es ist zumindest eine Profilrippe mit Querrillen, welche in Draufsicht zur axialen Richtung unter einem Winkel von 0° bis 55°, insbesondere von 5° bis 50°, verlaufen, und an welchen die Ausnehmungen 11 bzw. 12 ausgebildet sind, vorgesehen. Die in den Querrillen vorhandenen Rillengrundrillen sind optional, sodass die Rillenflanken auch bis zum Rillengrund reichen können. Die auf die radial äußere Begrenzungskante bezogene Länge c_{A}, c_{A2} der Ausnehmung 11, 12 beträgt 25% bis 100%, insbesondere zumindest 50%, bevorzugt zumindest 70%, der maximalen Breite b₁, b₂ der Profilrippe 1, 2, wobei die Ausnehmung 11 bei einer Länge c_{A}, welche von 100% der maximalen Breite b₁, b₂ abweicht, an einer der jeweiligen Umfangsrillen 3, 4 angrenzen oder zu diesen beanstandet ausgebildet sein kann. Die Querrillen, an welchen die Ausnehmungen 11 bzw. 12 ausgebildet sind, können einseitig innerhalb der Profilrippe enden und daher als Sackrillen ausgeführt sein, sodass die Profilrippe blockartige Profilelemente aufweist. Da sich die Ausnehmungen 11, 12 an einem an einer Querrille liegenden Kantenbereich der blockartigen Profilelemente befinden, reichen die Ausnehmungen nicht über den Bereich der Querrille hinaus. Bei durchquerenden Querrillen sind die blockartigen Profilelemente Profilblöcke, wie im Zusammenhang mit dem Ausführungsbeispiel beschrieben. Die Gestalt der Erhebung 17 kann von der beschriebenen Gestalt abweichen. Der Laufstreifen muss nicht laufrichtungsgebunden ausgeführt sein.

### Bezugszeichenliste

- 1.........................: mittlere Profilrippe
- 2.........................: schulterseitige Profilrippe
- 3.........................: zentrale Umfangsrille
- 4.........................: schulterseitige Umfangsrille
- 5.........................: mittlere Querrille
- 6.........................: schulterseitige Querrille
- 7.........................: mittlerer Profilblock
- 8.........................: schulterseitiger Profilblock
- 9a.......................: einlaufender Kantenbereich
- 9b.......................: auslaufender Kantenbereich
- 10.......................: Blockkante
- 11.......................: Ausnehmung
- 11a.....................: radial äußere Begrenzungskante
- 11a'....................: Kantenendabschnitt
- 11b.....................: radial innere Begrenzungskante
- 11b*...................: Bezugskante
- 12.......................: Rillengrund
- 13.......................: Rillenflanke
- 14.......................: Rillenflanke
- 15.......................: Rillengrundrille
- 16.......................: Übergangsflanke
- 17.......................: Erhebung
- 18.......................: Einbuchtung
- 19.......................: Seitenfläche
- 19a.....................: radial äußerer Flächenabschnitt
- 19b.....................: radial innerer Flächenabschnitt
- 20.......................: Boden
- 21.......................: Deckfläche
- 22.......................: scharfe Kante
- a₁ .......................: Abstand
- A-A.....................: Linie (Reifenäquatorialebene)
- b₁, b₂..................: maximale Breite
- b_{A}, b_{E}, b_{ER}, b_{QR}...: Breite
- b_{QR,MAX} ...............: maximale Breite
- c_{A}, c_{A2}, cₐ'...........: Länge
- h_{ER} .....................: maximale Höhe
- L.........................: Linie (seitlicher Rand der Bodenaufstandsfläche)
- m_{QR} ....................: Rillenmittellinie
- r₁, r₂....................: Radius
- R........................: Pfeil (Abrollrichtung)
- tₐ........................: Tiefe
- t_{A}, t_{E}....................: maximale Tiefe
- t_{QR}......................: maximale Tiefe
- T_{UR}.....................: Profiltiefe
- Z₂, Z₅..................: Detail
- α, β, γ, δ.............: Winkel

## Patentansprüche

1. Fahrzeugluftreifen mit einem Laufstreifen mit zumindest einer an zumindest einer Seite von einer Umfangsrille (3, 4) begrenzten Profilrippe (1, 2), welche mit in die Umfangsrille (3, 4) einmündenden, zur axialen Richtung unter Winkel (α, β) von 0° bis 55° verlaufenden Querrillen (5, 6) mit jeweils einer an der Laufstreifenperipherie ermittelten Breite (b_{QR}) von 2,75 mm bis 12,00 mm und einer maximalen Tiefe (t_{QR}) von 70% bis 100% der Profiltiefe (T_{UR}) versehen ist, wobei die Querrillen (5, 6) die Profilrippe (1, 2) in blockartige Profilelemente (7, 8) mit Kantenbereichen (9a, 9b) an den Querrillen (5, 6) gliedern, wobei an zumindest jeweils einem Kantenbereich (9b) eine in Draufsicht langgestreckte, nutförmige Ausnehmung (11) mit einer an der Laufstreifenperipherie liegenden radial äußeren Begrenzungskante (11a) und einer an der Querrille (5, 6) liegenden radial inneren Begrenzungskante (11b) ausgebildet ist, wobei sich die Breite (b_{QR}) der Querrille (5, 6) auf eine in die Laufstreifenperipherie projizierte Bezugskante (11b*) bezieht, welche sich durch in radialer Richtung erfolgte Projektion der radial inneren Begrenzungskante (11b) der Ausnehmung (11) ergibt,
**dadurch gekennzeichnet,**
**dass** in der Ausnehmung (11) eine an die Querrille (5) angrenzende, über die Länge der Ausnehmung (11) verlaufende und die radial innere Begrenzungskante (11b) aufweisende Erhebung (17) ausgebildet ist, wobei die Ausnehmung (11) an der der Querrille (5) abgewandten Seite der Erhebung (17) mit einer die Erhebung (17) entlangverlaufenden Einbuchtung (18) versehen ist, welche durch einen im Querschnitt bogenförmig sowie durch die tiefste Stelle der Ausnehmung (11) verlaufenden Boden (20) begrenzt ist, an welchen eine von der radial äußeren Begrenzungskante (11a) ausgehende, zumindest abschnittsweise bogenförmig verlaufende Seitenfläche (19b) der Ausnehmung (11) stetig anschließt.

2. Fahrzeugluftreifen nach Anspruch 1, **dadurch gekennzeichnet, dass** die Ausnehmung (11) an ihrer tiefsten Stelle in radialer Richtung eine maximale Tiefe (t_{A}) von 15% bis 30%, insbesondere von zumindest 20%, der Profiltiefe (T_{UR}) aufweist.

3. Fahrzeugluftreifen nach Anspruch 1 oder 2, **dadurch gekennzeichnet, dass** die Ausnehmung (11), im Querschnitt betrachtet, zwischen der radial äußeren Begrenzungskante (11a) und der projizierten Bezugskante (11b*) eine Breite (b_{A}) von 1,0 mm bis 1,8 mm, insbesondere von 1,2 mm bis 1,6 mm, aufweist.

4. Fahrzeugluftreifen nach einem der Ansprüche 1 bis 3, **dadurch gekennzeichnet, dass** die Ausnehmung (11, 12) eine auf ihre radial äußere Begrenzungskante (11a) bezogene, in die axiale Richtung projizierte Länge (c_{A}, c_{A2}) von 25% bis 100%, insbesondere von zumindest 50%, bevorzugt von zumindest 70%, der an der Laufstreifenperipherie in axialer Richtung ermittelten maximalen Breite (b₁, b₂) der Profilrippe (1, 2) aufweist, wobei die maximale Breite (b₁, b₂) bei schulterseitigen Profilrippen (1, 2) innerhalb der Bodenaufstandsfläche ermittelt ist.

5. Fahrzeugluftreifen nach einem der Ansprüche 1 bis 4, **dadurch gekennzeichnet, dass** der Boden (20) der Einbuchtung (18), im Querschnitt betrachtet, entlang eines Kreisbogens mit einem Radius (r₂) von 0,1 mm bis 0,5 mm, insbesondere von 0,2 mm bis 0,4 mm, verläuft.

6. Fahrzeugluftreifen nach einem der Ansprüche 1 bis 5, **dadurch gekennzeichnet, dass** der Boden (20) der Einbuchtung (18) an einer an der Erhebung (17) ausgebildeten scharfen Kante (22) endet.

7. Fahrzeugluftreifen nach Anspruch 3 und 6, **dadurch gekennzeichnet, dass** die Einbuchtung (18) eine ausgehend von der scharfen Kante (22) parallel zur Laufstreifenperipherie gemessene, konstante Breite (b_{E}) von 35% bis 45% der Breite (b_{A}) der Ausnehmung (11) aufweist.

8. Fahrzeugluftreifen nach Anspruch 6 oder 7, **dadurch gekennzeichnet, dass** die Einbuchtung (18) in radialer Richtung eine gegenüber dem Niveau der scharfen Kante (22) in radialer Richtung ermittelte maximale Tiefe (t_{E}) von 0,10 mm bis 0,30 mm, insbesondere von 0,15 mm bis 0,25 mm, aufweist.

9. Fahrzeugluftreifen nach einem der Ansprüche 1 bis 8, **dadurch gekennzeichnet, dass** die Erhebung (17) eine gegenüber der tiefsten Stelle der Einbuchtung (18) in radialer Richtung ermittelte maximale Höhe (h_{ER}) von 0,10 mm bis 0,30 mm, insbesondere von 0,15 mm bis 0,25 mm, aufweist.

10. Fahrzeugluftreifen nach einem der Ansprüche 1 bis 9, **dadurch gekennzeichnet, dass** die Erhebung (17) eine parallel zur Laufstreifenperipherie verlaufende Deckfläche (21) aufweist.

11. Fahrzeugluftreifen nach Anspruch 4 und 9, **dadurch gekennzeichnet, dass** die Erhebung (17), im Querschnitt betrachtet, eine an der Deckfläche (21) ermittelte Breite (b_{ER}) von 20% bis 30% der Breite (b_{A}) der Ausnehmung (11) aufweist.

12. Fahrzeugluftreifen nach einem der Ansprüche 1 bis 11, **dadurch gekennzeichnet, dass** sich die Seitenfläche (19) der Ausnehmung (11) aus einem radial äußeren Flächenabschnitt (19a) und einem radial inneren Flächenabschnitt (19b) zusammensetzt, wobei der radial äußere Flächenabschnitt (19a) gerade sowie zur radialen Richtung unter einem Winkel (δ) von 0° bis 3°, insbesondere von höchstens 2°, verläuft und in radialer Richtung bis in eine Tiefe (tₐ) von 0,30 mm bis 0,70 mm, insbesondere 0,40 mm bis 0,60 mm, reicht, wobei der radial innere Flächenabschnitt (19b) stetig an den radial äußeren Flächenabschnitt (19a) anschließt und bogenförmig sowie zumindest über den Großteil seiner Erstreckung entlang eines Kreisbogens mit einem Radius r₁ von 1,3 mm bis 1,7 mm verläuft.

13. Fahrzeugluftreifen nach einem der Ansprüche 1 bis 12, **dadurch gekennzeichnet, dass** an den Querrillen (5, 6) jeweils ausschließlich an einem Kantenbereich (9a) eine Ausnehmung (11) ausgebildet ist und der andere Kantenbereich (9b) von einer Blockkante (10) gebildet ist.

14. Fahrzeugluftreifen nach einem der Ansprüche 1 bis 13, **dadurch gekennzeichnet, dass** der Laufstreifen laufrichtungsgebunden ausgeführt ist, sodass von den Kantenbereichen (9a, 9b) der blockartigen Profilelemente (7, 8) der eine ein beim Abrollen des Reifens bei Vorwärtsfahrt zuerst in den Untergrund eintretender, einlaufender Kantenbereich (9a) und der andere ein auslaufender Kantenbereich (9b) ist, wobei die Ausnehmungen (11) zumindest, insbesondere ausschließlich, an den auslaufenden Kantenbereichen (9b) ausgebildet sind.

## Claims

1. Pneumatic vehicle tyre having a tread with at least one profile rib (1, 2) which is delimited on at least one side by a circumferential groove (3, 4) and is provided with transverse grooves (5, 6) which merge into the circumferential groove (3, 4), run at an angle (α, β) of 0° to 55° to the axial direction and each have a
width (b_{QR}), determined at the periphery of the tread, of 2.75 mm to 12.00 mm and a maximum depth (t_{QR}) of 70% to 100% of the profile depth (T_{UR}), wherein the transverse grooves (5, 6) divide the profile rib (1, 2) into block-like profile elements (7, 8) with edge regions (9a, 9b) at the transverse grooves (5, 6), wherein at at least one edge region (9b) in each case there is formed a groove-shaped recess (11) which is elongated in plan view and has a radially outer delimiting edge (11a), lying at the periphery of the tread, and a radially inner delimiting edge (11b), lying at the transverse groove (5, 6), wherein the width (b_{QR}) of the transverse groove (5, 6) relates to a reference edge (11b*) which is projected into the periphery of the tread and results from radial projection of the radially inner delimiting edge (11b) of the recess (11),
**characterized**
**in that** in the recess (11) there is formed an elevation (17) which is adjacent to the transverse groove (5), runs over the length of the recess (11) and has the radially inner delimiting edge (11b), wherein the recess (11) is provided on the side of the elevation (17) that is facing away from the transverse groove (5) with an indentation (18), which runs along the elevation (17) and is delimited by a base (20) which in cross section takes the form of an arc and runs through the lowest point of the recess (11) and is continuously adjoined by a side face (19b) of the recess (11) that extends from the radially outer delimiting edge (11a) and runs at least partly in the form of an arc.

2. Pneumatic vehicle tyre according to Claim 1, **characterized in that** the recess (11) at its lowest point in the radial direction has a maximum depth (t_{A}) of 15% to 30%, in particular of at least 20%, of the profile depth (T_{UR}).

3. Pneumatic vehicle tyre according to Claim 1 or 2, **characterized in that** the recess (11), viewed in cross section, has a width (b_{A}) of 1.0 mm to 1.8 mm, in particular of 1.2 mm to 1.6 mm, between the radially outer delimiting edge (11a) and the projected reference edge (11b*).

4. Pneumatic vehicle tyre according to one of Claims 1 to 3, **characterized in that** the recess (11, 12) has, based on its radially outer delimiting edge (11a), a length (C_{A}, C_{A2}), projected into the axial direction, of 25% to 100%, in particular of at least 50%, preferably of at least 70%, of the maximum width (b₁, b₂) of the profile rib (1, 2), determined in the axial direction at the periphery of the tread, wherein the maximum width (b₁, b₂) in the case of shoulder-side profile ribs (1, 2) is determined within the ground contact patch.

5. Pneumatic vehicle tyre according to one of Claims 1 to 4, **characterized in that** the base (20) of the indentation (18), viewed in cross section, runs along an arc with a radius (r₂) of 0.1 mm to 0.5 mm, in particular of 0.2 mm to 0.4 mm.

6. Pneumatic vehicle tyre according to one of Claims 1 to 5, **characterized in that** the base (20) of the indentation (18) ends at a sharp edge (22) formed on the elevation (17).

7. Pneumatic vehicle tyre according to Claim 3 and 6, **characterized in that** the indentation (18) has a constant width (b_{E}), measured parallel to the periphery of the tread starting from the sharp edge (22), of 35% to 45% of the width (b_{A}) of the recess (11).

8. Pneumatic vehicle tyre according to Claim 6 or 7, **characterized in that** the indentation (18) in the radial direction has a maximum depth (t_{E}) of 0.10 mm to 0.30 mm, in particular of 0.15 mm to 0.25 mm, determined in the radial direction in relation to the level of the sharp edge (22).

9. Pneumatic vehicle tyre according to one of Claims 1 to 8, **characterized in that** the elevation (17) has a maximum height (h_{ER}) of 0.10 mm to 0.30 mm, in particular of 0.15 mm to 0.25 mm, determined in the radial direction in relation to the lowest point of the indentation (18).

10. Pneumatic vehicle tyre according to one of Claims 1 to 9, **characterized in that** the elevation (17) has a top surface (21) running parallel to the periphery of the tread.

11. Pneumatic vehicle tyre according to Claim 4 and 9, **characterized in that** the elevation (17), viewed in cross section, has a width (b_{ER}), determined on the top surface (21), of 20% to 30% of the width (b_{A}) of the recess (11).

12. Pneumatic vehicle tyre according to one of Claims 1 to 11, **characterized in that** the side face (19) of the recess (11) is made up of a radially outer face portion (19a) and a radially inner face portion (19b), wherein the radially outer face portion (19a) runs rectilinearly and at an angle (δ) of 0° to 3°, in particular of at most 2°, to the radial direction and reaches in the radial direction to a depth (tₐ) of 0.30 mm to 0.70 mm, in particular 0.40 mm to 0.60 mm, wherein the radially inner face portion (19b) continuously adjoins the radially outer face portion (19a) and takes the form of an arc and runs at least over the majority of its extent along an arc with a radius r₁ of 1.3 mm bis 1.7 mm.

13. Pneumatic vehicle tyre according to one of Claims 1 to 12, **characterized in that** at the transverse grooves (5, 6) in each case there is formed a recess (11) exclusively at one edge region (9a) and the other edge region (9b) is formed by a block edge (10).

14. Pneumatic vehicle tyre according to one of Claims 1 to 13, **characterized in that** the tread is directional, such that, of the edge regions (9a, 9b) of the block-like profile elements (7, 8), the one is a leading edge region (9a) which enters the ground contact patch first as the tyre rolls during forward travel and the other is a trailing edge region (9b), wherein the recesses (11) are formed at least, in particular exclusively, on the trailing edge regions (9b).

## Revendications

1. Pneumatique de véhicule avec une bande de roulement avec au moins une nervure de profil (1, 2) délimitée sur au moins un côté par une rainure circonférentielle (3, 4), qui est munie de rainures transversales (5, 6) débouchant dans la rainure circonférentielle (3, 4), s'étendant par rapport à la direction axiale selon un angle (α, β) de 0° à 55°, avec respectivement une
largeur (b_{QR}) déterminée à la périphérie de la bande de roulement de 2,75 mm à 12,00 mm et une profondeur maximale (t_{QR}) de 70 % à 100 % de la profondeur de profil (T_{UR}), les rainures transversales (5, 6) divisant la nervure de profil (1, 2) en éléments de profil (7, 8) de type bloc avec des zones de bord (9a, 9b) sur les rainures transversales (5, 6), un évidement (11) en forme de rainure, allongé en vue de dessus, étant réalisé sur au moins une zone de bord (9b) respective, avec un bord de délimitation radialement extérieur (11a) situé à la périphérie de la bande de roulement et un bord de délimitation radialement intérieur (11b) situé sur la rainure transversale (5, 6), la largeur (b_{QR}) de la rainure transversale (5, 6) se rapportant à un bord de référence (11b*) projeté dans la périphérie de la bande de roulement, qui est obtenu par projection, dans la direction radiale, du bord de délimitation radialement intérieur (11b) de l'évidement (11),
caractérisé en ce
dans l'évidement (11), est réalisée une élévation (17) adjacente à la rainure transversale (5), s'étendant sur la longueur de l'évidement (11) et présentant le bord de délimitation radialement intérieur (11b), l'évidement (11) étant pourvu, sur le côté de l'élévation (17) détourné de la rainure transversale (5), d'un renfoncement (18) s'étendant le long de l'élévation (17), qui est délimité par un fond (20) s'étendant en forme d'arc dans la section transversale ainsi que par le point le plus profond de l'évidement (11), auquel se raccorde en continu une surface latérale (19b) de l'évidement (11) partant du bord de délimitation radialement extérieur (11a), s'étendant en forme d'arc au moins par sections.

2. Pneumatique de véhicule selon la revendication 1, **caractérisé en ce que** l'évidement (11) présente, à son point le plus profond dans la direction radiale, une profondeur maximale (t_{A}) de 15 % à 30 %, notamment d'au moins 20 %, de la profondeur de profil (T_{UR}).

3. Pneumatique de véhicule selon la revendication 1 ou 2, **caractérisé en ce que** l'évidement (11), considéré dans la section transversale, entre le bord de délimitation radialement extérieur (11a) et le bord de référence projeté (11b*), présente une largeur (b_{A}) de 1,0 mm à 1,8 mm, notamment de 1,2 mm à 1,6 mm.

4. Pneumatique de véhicule selon l'une quelconque des revendications 1 à 3, **caractérisé en ce que** l'évidement (11, 12) présente une longueur (C_{A}, C_{A2}), par rapport à son bord de délimitation radialement extérieur (11a), projetée dans la direction axiale, de 25 % à 100 %, notamment d'au moins 50 %, de préférence d'au moins 70 %, de la largeur maximale (b₁, b₂) de la nervure de profil (1, 2) déterminée dans la direction axiale à la périphérie de la bande de roulement, la largeur maximale (b₁, b₂) étant déterminée à l'intérieur de la surface de contact avec le sol pour les nervures de profil (1, 2) situées du côté de l'épaulement.

5. Pneumatique de véhicule selon l'une quelconque des revendications 1 à 4, **caractérisé en ce que** le fond (20) du renfoncement (18), considéré dans la section transversale, s'étend le long d'un arc de cercle d'un rayon (r₂) de 0,1 mm à 0,5 mm, notamment de 0,2 mm à 0,4 mm.

6. Pneumatique de véhicule selon l'une quelconque des revendications 1 à 5, **caractérisé en ce que** le fond (20) du renfoncement (18) se termine par un bord vif (22) réalisé sur l'élévation (17).

7. Pneumatique de véhicule selon les revendications 3 et 6, **caractérisé en ce que** le renfoncement (18) présente une largeur constante (b_{E}), mesurée à partir du bord vif (22) parallèlement à la périphérie de la bande de roulement, de 35 % à 45 % de la largeur (b_{A}) de l'évidement (11).

8. Pneumatique de véhicule selon la revendication 6 ou 7, **caractérisé en ce que** le renfoncement (18) présente, dans la direction radiale, une profondeur maximale (t_{E}), déterminée par rapport au niveau du bord vif (22) dans la direction radiale, de 0,10 mm à 0,30 mm, notamment de 0,15 mm à 0,25 mm.

9. Pneumatique de véhicule selon l'une quelconque des revendications 1 à 8, **caractérisé en ce que** l'élévation (17) présente une hauteur maximale (h_{ER}), déterminée par rapport au point le plus profond du renfoncement (18) dans la direction radiale, de 0,10 mm à 0,30 mm, notamment de 0,15 mm à 0,25 mm.

10. Pneumatique de véhicule selon l'une quelconque des revendications 1 à 9, **caractérisé en ce que** l'élévation (17) présente une surface de recouvrement (21) parallèle à la périphérie de la bande de roulement.

11. Pneumatique de véhicule selon les revendications 4 et 9, **caractérisé en ce que** l'élévation (17), considérée dans la section transversale, présente une largeur (b_{ER}), déterminée sur la surface de recouvrement (21), de 20 % à 30 % de la largeur (b_{A}) de l'évidement (11).

12. Pneumatique de véhicule selon l'une quelconque des revendications 1 à 11, **caractérisé en ce que** la surface latérale (19) de l'évidement (11) se compose d'une section de surface radialement extérieure (19a) et d'une section de surface radialement intérieure (19b), la section de surface radialement extérieure (19a) s'étendant sous forme rectiligne ainsi que selon un angle (δ) par rapport à la direction radiale de 0° à 3°, notamment d'au plus 2°, et atteint dans la direction radiale une profondeur (tₐ) de 0,30 mm à 0,70 mm, notamment de 0,40 mm à 0,60 mm, la section de surface radialement intérieure (19b) se raccordant en continu à la section de surface radialement extérieure (19a) et s'étendant en forme d'arc ainsi qu'au moins sur la majeure partie de son étendue le long d'un arc de cercle d'un rayon r₁ de 1,3 mm à 1,7 mm.

13. Pneumatique de véhicule selon l'une quelconque des revendications 1 à 12, **caractérisé en ce qu'**un évidement (11) est réalisé sur les rainures transversales (5, 6) respectivement exclusivement sur une zone de bord (9a) et l'autre zone de bord (9b) est formée par un bord de bloc (10).

14. Pneumatique de véhicule selon l'une quelconque des revendications 1 à 13, **caractérisé en ce que** la bande de roulement est conçue sous forme directionnelle, de telle sorte que, parmi les zones de bord (9a, 9b) des éléments de profil (7, 8) de type bloc, l'une est une zone de bord entrante (9a) qui entre en premier dans le sol lors du roulement du pneumatique en marche avant et l'autre est une zone de bord sortante (9b), les évidements (11) étant réalisés au moins, notamment exclusivement, sur les zones de bord sortantes (9b).
